# EUROPÄISCHE PATENTSCHRIFT

(11) **EP 1 774 992 B1**
(45) Veröffentlichungstag und Bekanntmachung des Hinweises auf die Patenterteilung: **16.06.2010**
(21) Anmeldenummer: 05022553.1
(22) Anmeldetag: 17.10.2005
(51) Int. Cl.: A62C 35/68, F16L 3/11

(54) **Sprinklerschelle**
Sprinkler clamp
Bride de fixation pour arroseur

(43) Veröffentlichungstag der Anmeldung: 18.04.2007
(73) Patentinhaber: SW Stanzwerk Glarus AG, 8750 Glarus (CH)
(72) Erfinder: Müller, Harald, 65719Hofheim-Wallau (DE)
(74) Vertreter: Erb, Henning

(56) Entgegenhaltungen:
- US-A- 2 996 274
- US-A- 3 261 580
- US-A- 5 149 040

## Beschreibung

Die vorliegende Erfindung befaßt sich mit einer Sprinklerschnelle mit einem aufbiegbaren, schlaufenförmigen Haltebügel, dessen Enden jeweils eine Öffnung aufweisen und sich in geschlossenem Zustand überlappen, in welchem sich eine erste Öffnung im innenliegenden Ende des Haltebügels mit einer zweiten Öffnung im außenliegenden Ende des Haltebügels deckt, und einem Schließelement, das im Montagezustand in beide Öffnungen drehbar eingesteckt ist und einen Radialvorsprung aufweist, der von innen an dem Rand der innenliegenden Öffnung abstützbar ist, wobei der Querschnitt der zweiten Öffnung von dem Querschnitt der ersten Öffnung abweicht und das Schließelement mit Abstand zu dem Radialvorsprung über eine Radialerweiterung verfügt, über welche es an dem Rand der ersten Öffnung unverlierbar gehalten, aber in die zweite Öffnung einführbar ist.

Sprinklerschellen werden verwendet, um Leitungen von Sprinkleranlagen zu befestigen. Da Sprinkler in Gebäuden vorzugsweise im Deckenbereich angeordnet sind, werden die Sprinklerleitungen an der Decke hängend befestigt. Als Vorrichtung zur Befestigung der Leitungen sind Sprinklerschellen der eingangs genannten Art bekannt, mit denen die Leitungen an Montageteilen montiert werden, die an einer Tragkonstruktion, z. B. einer Montageschiene oder der Deckenuiiterseite, befestigt sind. Bei der Montage wird zunächst der schlaufenförmige Haltebügel der Sprinklerschelle aufgebogen und über die Sprinklerleitung geschoben. Danach wird der Bügel an seinen Seiten zusammengedrückt, so daß sich die beiden Enden überlappen und die Öffnungen sich decken. Das Schließelement wird in die beiden Öffnungen gesteckt, um anschließend mit dem an der Decke befestigten Montageteil verbunden zu werden, was in der Regel durch Aufschrauben des Schließelements auf einen Gewindestift des Montageteils erfolgt. Es hat sich jedoch gezeigt, daß das Einstecken des Schließelements aufgrund der gleichzeitig innerhalb des schlaufenförmigen Haltebügels liegenden Sprinklerleitung erschwert ist. Vor allem beim Ausrichten der Sprinklerschelle auf der Sprinklerleitung in Bezug zu dem bereits montierten Montageelement kommt es häufig dazu, daß das Schließelement aus den Öffnungen nach unten herausfällt. Als Folge dessen muß das Schließelement auf dem Boden gesucht und wieder aufgehoben werden. Ein weiterer Nachteil besteht darin, daß der Haltebügel und das Schließelement erst unmittelbar vor der Montage zusammengefügt werden und somit bei allen Handhabungsschritten, z. B. Verkauf, Lagerung, Lieferung, transport etc., jeweils zwei verschiedene Einzelteile vorliegen.

Eine Sprinklerschelle der eingangs genannten Art ist aus der US-A-2,996,274 bekannt.

Der Vorteil dieser Sprinklerschelle besteht darin, daß das Schließelement während des Montagevorgangs nicht mehr unbeabsichtigt aus den Öffnungen herausfallen kann. Außerdem ist gewährleistet, daß auch bereits während des Transports das Schließelement nicht abhanden kommen kann.

Aus dem Stand der Technik ist weiterhin eine Lösung bekannt, bei der ein schlaufenförmiger Haltebügel an seinen Enden U-förmig umgebogen ist und von oben in eine Ringnut eines Schließelements eingehängt wird, das zuvor auf einen Gewindestift eines Montageteils geschraubt worden ist, das an der Decke befestigt ist. Außerdem ist eine Lösung bekannt, bei der eine Flanke eines schlaufenförmigen Haltebügels zwischen zwei Muttern auf einem Gewindestift gehalten ist und die andere Flanke gabelartig ausgebildet ist und auf den Gewindestift aufgesteckt wird, wo die beiden gabelförmigen Laschen dann verklemmt werden.

Die Aufgabe der vorliegenden Erfindung besteht darin, eine Sprinklerschelle der eingangs genannten Art zu schaffen, die eine einfache Handhabung ermöglicht und kostengünstig ist.

Erfindungsgemäß wird die Aufgabe durch eine Sprinklerschelle der eingangs bezeichneten Art gelöst, bei der das Schließelement an seinem dem Radialvorsprung entgegengesetzt liegenden Ende zwei sich gegenüberliegende Radialerweiterungen aufweist, die einstückig angeformte Vorsprünge sind oder als Laschen aufgebogen sind, wobei der Rand der ersten Öffnung mit einer Ausnehmung versehen ist, deren Form wenigstens einer der beiden Radialerweiterungen angepaßt ist.

In einer bevorzugten Ausführungsform sind die Öffnungen kreisförmig und der Durchmesser der zweiten Öffnung ist größer als die größte radiale Weite des Schließelements im Bereich der Radialerweiterung. Dadurch läßt sich das Schließelement in jeder Lage in die zweite Öffnung einstecken, ohne daß eine bestimmte Drehstellung eingestellt werden müßte.

Das erfindungsgemäße Schließelement weist an seinem dem Radialvorsprung entgegengesetzt liegenden Ende zwei sich gegenüberliegende Radialerweiterungen auf. Durch die Radialerweiterungen kann das Schließelement aus der ersten Öffnung nicht herausfallen. Zusammen mit dem Radialvorsprung ergibt sich ein sicherer unverlierbar Halt, wobei der Rand der ersten Öffnung mit einer Ausnehmung versehen, deren Form wenigstens einer der beiden Radialerweiterungen angepaßt ist, es möglich ist, das Schließelement in die erste Öffnung einzuführen. Ein manuelles oder maschinelles Aufweiten des Schließelements nach dem Einsetzen in die erste Öffnung des Haltebügels ist nicht erforderlich.

Das Schließelement ist aus Metall und die Radialerweiterungen sind als einstückig angeformte Vorsprünge oder Laschen aufgebogen, um das Schließelement kostengünstig herstellen zu können.

Zur Gewährleistung eines unverlierbaren Halts ist das Schließelement vorzugsweise nur in einer geneigten Stellung in die erste Öffnung einführbar, bei der eine der beiden Radialerweiterungen des Schließelements zuerst in die Öffnung eingeführt wird und dadurch den Öffnungsrand hintergreift. Die andere der beiden Radialerweiterungen läßt sich dann an der Stelle der Ausnehmung des Öffnungsrands in die Öffnung einführen. Wenn das Schließelement in die Öffnung eingeführt ist, kann es nur in der oben beschriebenen, geneigten Stellung wieder aus der Öffnung herausgenommen werden, d. h. das Schließelements kann nicht senkrecht zur Öffnungsfläche aus der Öffnung herausfallen oder herausgezogen werden.

In einer bevorzugten Ausführung ist das Schließelement als Schließmutter mit einer Durchgangsbohrung mit Innengewinde ausgebildet, so daß die Befestigung an einem Montageteil durch Aufschrauben auf einen Gewindestift in bekannter Art und Weise erfolgen kann.

In einer praktischen Ausführung endet das Innengewinde in der Durchgangsbohrung mit Abstand zu dem Bereich der Radialerweiterungen. Dadurch ist gewährleistet, daß das Gewinde durch das Aufbiegen der Laschen nicht beschädigt wird. Außerdem kann das Schließelement beim Befestigungsvorgang zunächst auf einen Gewindestift oder ähnliches aufgesteckt werden, wodurch die Sprinklerschelle bereits etwas in ihrer Lage fixiert ist, bevor das Schließelement auf den Gewindestift aufgedreht wird.

Vorzugsweise hat das Schließelement auf der Umfangsfläche einen aufgerauhten Griffbereich, um das Aufdrehen auf einen Gewindestift eines Montageteils zu erleichtern. Das Schließelement kann unter Berücksichtigung der Drehbarkeit in den Öffnungen auch mit einer Profilierung zum Ansetzen eines Werkzeugs versehen sein.

Zweckmäßigerweise ist der Haltebügel aus Blech und weist eine radiale Federkraft auf. Durch die in entgegengesetzte Richtungen auf das Schließelement wirkenden Öffnungsränder wird das in die Öffnungen eingeführte Schließelement in einer Vormontagestellung leicht verklemmt. Dadurch ist es möglich, den schlaufenförmigen Haltebügel der Sprinklerschelle, der über die zu befestigende Rohrleitung gestülpt wird, zusammenzudrücken, so daß sich die Enden überlappen, und das Schließelement, das in der ersten Öffnung unverlierbar gehalten ist, in die zweite Öffnung einzuschieben, ohne daß die Sprinklerschelle auf das Montageteil ausgerichtet werden muß. Im Sinne einer rationalen Arbeitsteilung beim Montagevorgang können die Rohrleitungen zuerst mit Sprinklerschellen versehen werden, um in einem zweiten Arbeitsschritt mit den Sprinklerschellen an den Montageteilen befestigt zu werden.

Nachfolgend wird anhand der beigefügten Zeichnungen näher auf ein Ausführungsbeispiel der Erfindung eingegangen. Es zeigen:
- Fig. 1: eine perspektivische Ansicht eines schlaufenförmigen Haltebügels einer Sprinklerschelle;
- Fig. 2: eine perspektivische Ansicht eines Schließelements der Sprinklerschelle;
- Fig. 3: eine perspektivische Ansicht einer Sprinklerschelle, bei der das Schließelement nach Fig. 2 in die innenliegende Öffnung des Haltebügels nach Fig. 1 eingeführt ist, und
- Fig. 4: eine perspektivische Ansicht einer Sprinklerschelle nach Fig. 3, bei der das Schließelement in beide Öffnungen eingesteckt ist.

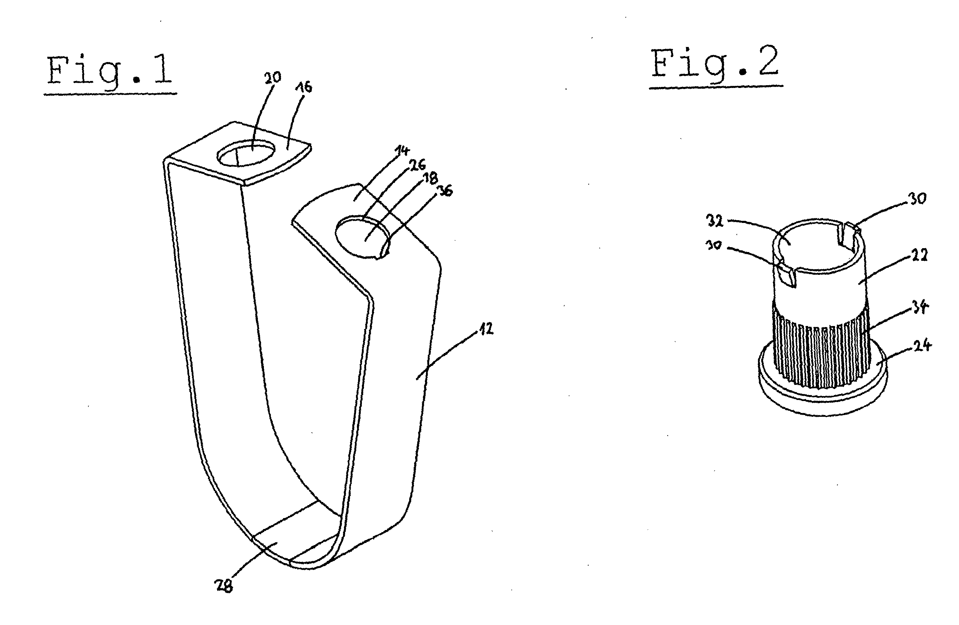

Fig. 1 zeigt einen schlaufenförmigen Haltebügel 12 dessen Enden 14, 16 eine erste Öffnung 18 und eine zweite Öffnung 20 aufweisen. Der Haltebügel 12 ist aus Blech hergestellt, wobei der Bügel im Ausgangszustand offen ist und die beiden Enden 14, 16 einen Abstand zueinander haben. Der Haltebügel 12 weist eine Elastizität auf, wobei die beim Zusammendrücken entstehende Federkraft so dimensioniert ist, daß ein manuelles Zusammendrücken des Bügels an den seitlichen Flanken möglich ist, so daß sich die Enden 14, 16 in geschlossenem Zustand überlappen und sich die erste Öffnung 18 im innenliegenden Ende 14 des Haltebügels 12 mit der zweiten Öffnung 20 im außenliegenden Ende 16 des Haltebügels 12 deckt. Die Öffnungen 18, 20 sind kreisförmig, wobei der Durchmesser der zweiten Öffnung 20 größer als der Durchmesser der ersten Öffnung 18 ist.

In die Öffnungen 18, 20 ist ein in Fig. 2 gezeigtes Schließelement 22 einführbar. Das Schließelement 22 weist einen Radialvorsprung 24 auf, der von innen an dem Rand 26 der innenliegenden Öffnung 18 abstützbar ist. Über den Radialvorsprung 24 erfolgt in montiertem Zustand die Abtragung des Eigengewichts der nicht gezeigten Sprinklerleitung, die in einer entgegengesetzt von den Enden 14, 16 angeordneten Rundung 28 des Haltebügels 12 liegt. Die Lastabtragung von dem Haltebügel 12 auf das Schließelement 22 ist beispielsweise auch mittels mehrerer einzelner Radialvorsprünge an Stelle des im Ausführungsbeispiel ringförmig ausgebildeten Radialvorsprungs 24 möglich. Das Schließelement 22 ist an seinem dem Radialvorsprung 24 entgegengesetzt liegenden Ende mit zwei sich gegenüberliegenden Radialerweiterungen 30 versehen, durch die das Schließelement 22 unverlierbar in der ersten Öffnung 18 gehalten ist.

Das Schließelement 22 ist aus Metall, wobei die Radialerweiterungen 30 als einstückig angeformte Laschen aufgebogen sind. Das Schließelement 22 ist als Schließmutter mit einer Durchgangsbohrung 32 mit einem Innengewinde ausgebildet. Das Innengewinde ist in der Durchgangsbohrung 32 mit Abstand zu dem Bereich der Radialerweiterungen 30 ausgeführt. Zum Befestigen an einem Montageteil mit beispielsweise einem Gewindestift ist das Schließelement 22 auf der Umfangsfläche mit einem aufgerauhten Griffbereich 34 versehen. Zur Erhöhung der Variabilität kann die Schließmutter mit einem Stufengewinde versehen sein, so daß das Schließelement 22 an verschiedenen Montageteilen mit zwei unterschiedlichen Gewindemaßen, z. B. M 10 und M 12 befestigt werden kann.

Der Rand 26 der ersten Öffnung 18 ist mit einer Ausnehmung 36 ausgebildet, deren Form wenigstens einer der beiden Radialerweiterungen 30 ungefähr entspricht.

Das Schließelement 22 ist zum unverlierbaren Halt nur in einer geneigten Stellung in die erste Öffnung 18 einführbar. Dabei nimmt die Achse des Schließelements 22 eine Winkellage zur Senkrechten der Öffnungsfläche der ersten Öffnung 18 ein. Eine der beiden Radialerweiterungen 30 ist gegenüber der Ausnehmung 36 angeordnet und wird zuerst in die erste Öffnung 18 eingeführt. Die andere der beiden Radialerweiterungen 30 kann dann durch die Ausnehmung 36 in die erste Öffnung 18 eingeschwenkt werden.

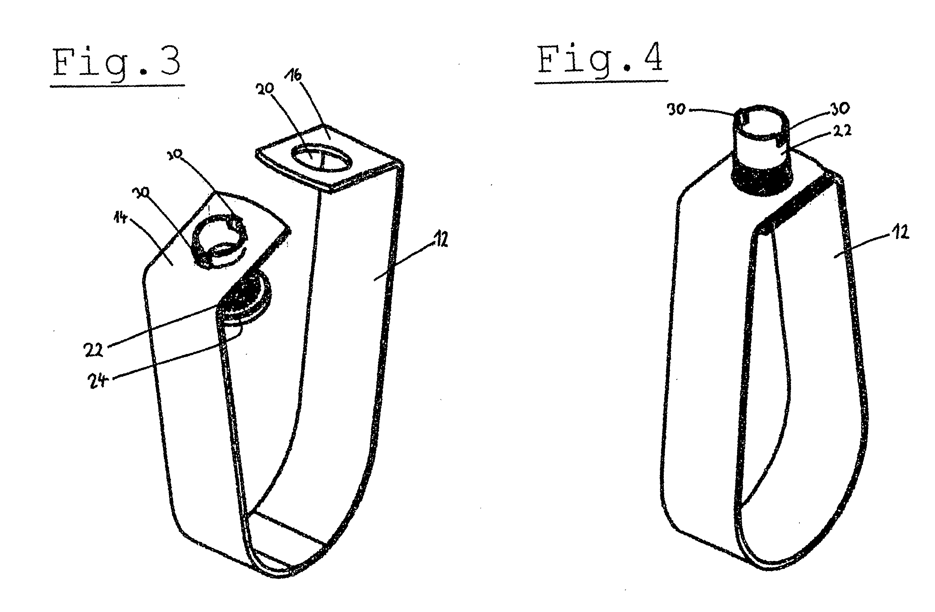

Fig. 3 zeigt eine erfindungsgemäße Sprinklerschelle, bei der das Schließelement 22 durch die beiden Radialerweiterungen 30 unverlierbar in der ersten Öffnung 18 gehalten ist, nachdem es, wie oben beschrieben, in die erste Öffnung 18 eingeführt worden ist. Durch Zusammenbiegen des Haltebügels 12 überlappen sich die beiden Enden 14, 16, so daß sich die erste Öffnung 18 mit der zweiten Öffnung 20 deckt. Da die zweite Öffnung 20 einen Durchmesser hat, der größer als der äußere Abstand der beiden Radialerweiterungen 30 des Schließelements 22 im Bereich der Radialerweiterungen 30 ist, kann das Schließelement 22 von innen durch die zweite Öffnung 20 nach außen gesteckt werden, um an einem nicht gezeigten Montageteil befestigt zu werden. Fig. 4 zeigt diesen Zustand der Sprinklerschelle, wobei die zwischen den beabstandeten Enden 14, 16 in den schlaufenförmigen Haltebügel 12 eingeführte Sprinklerleitung nicht dargestellt ist.

## Patentansprüche

1. Sprinklerschelle mit einem aufbiegbaren, schlaufenförmigen Haltebügel (12), dessen Enden (14, 16) jeweils eine Öffnung (18, 20) aufweisen und sich in geschlossenem Zustand überlappen, in welchem sich eine erste Öffnung (18) im innenliegenden Ende (14) des Haltebügels (12) mit einer zweiten Öffnung (20) im außenliegenden Ende (16) des Haltebügels (12) deckt, und einem Schließelement (22), das im Montagezustand in beide Öffnungen (18, 20) drehbar eingesteckt ist und einen Radialvorsprung (24) aufweist, der von innen an dem Rand (26) der innenliegenden Öffnung (18) abstützbar ist, wobei der Querschnitt der zweiten Öffnung (20) von dem Querschnitt der ersten Öffnung (18) abweicht und das Schließelement (22) mit Abstand zu dem Radialvorsprung (24) über eine Radialerweiterung (30) verfügt, über welche es an dem Rand (26) der ersten Öffnung (18) unverlierbar gehalten, aber in die zweite Öffnung (20) einführbar ist, **dadurch gekennzeichnet, dass** das Schließelement (22) an seinem dem Radialvorsprung (24) entgegengesetzt liegenden Ende zwei sich gegenüberliegende Radialerweiterungen (30) aufweist, die einstückig angeformte Vorsprünge sind oder als Laschen aufgebogen sind, wobei der Rand (26) der ersten Öffnung (18) mit einer Ausnehmung (36) versehen ist, deren Form wenigstens einer der beiden Radialerweiterungen (30) angepaßt ist.

2. Sprinklerschelle nach Anspruch 1, **dadurch gekennzeichnet, daß** die Öffnungen (18, 20) kreisförmig sind und der Durchmesser der zweiten Öffnung (20) größer als die größte radiale Weite des Schließelements (22) im Bereich der Radialerweiterung (30) ist.

3. Sprinklerschelle nach Anspruch 1 oder 2, **dadurch gekennzeichnet, daß** das Schließelement (22) zum unverlierbaren Halt nur in einer geneigten Stellung in die erste Öffnung (18) einführbar ist.

4. Sprinklerschelle nach einem der vorhergehenden Ansprüche, **dadurch gekennzeichnet, daß** das Schließelement (22) als Schließmutter mit einer Durchgangsbohrung (32) mit Innengewinde ausgebildet ist.

5. Sprinklerschelle nach Anspruch 4, **dadurch gekennzeichnet, daß** das Innengewinde in der Durchgangsbohrung (32) mit Abstand zu dem Bereich der Radialerweiterungen (30) endet.

6. Sprinklerschelle nach einem der vorhergehenden Ansprüche, **dadurch gekennzeichnet, daß** das Schließelement (22) auf der Umfangsfläche einen aufgerauhten Griffbereich (34) hat.

7. Sprinklerschelle nach einem der vorhergehenden Ansprüche, **dadurch gekennzeichnet, daß** der Haltebügel (12) aus Blech ist.

8. Sprinklerschelle nach einem der vorhergehenden Ansprüche, **dadurch gekennzeichnet, daß** der Haltebügel (12) eine radiale Federkraft aufweist, durch die das in die Öffnungen (18, 20) eingeführte Schließelement (22) in einer vormontagestellung gehalten ist.

## Claims

1. A sprinkler clamp with a loop-shaped mounting bracket (12) which can be bent up and the ends (14,16) of which each have an opening (18,20) and overlap in the closed condition, in which a first opening (18) in the inner end (14) of the mounting bracket (12) registers with a second opening (20) in the outer end (16) of the mounting bracket (12), and with a closing element (22) which, in an assembled condition, is inserted rotatably in both openings (18,20) and has a radial projection (24) which can be supported from the inside on the rim (26) of the inner opening (18), wherein the cross-section of the second opening (20) differs from the cross-section of the first opening (18) and, at a distance from the radial projection (24), the closing element (22) is provided with a radial widening (30) by way of which it is retained captive on the rim (26) of the first opening (18) but can be inserted into the second opening (20), **characterised in that**, at its end situated opposite the radial projection (24), the closing element (22) has two mutually opposed radial widenings (30) which are integrally formed projections or are bent up as tabs, wherein the rim (26) of the first opening (18) is provided with a recess (36), the shape of which matches at least one of the two radial widenings (30).

2. A sprinkler clamp according to Claim 1, **characterised in that** the openings (18,20) are circular and the diameter of the second opening (20) is greater than the maximum radial width of the closing element (22) in the area of the radial widening (30).

3. A sprinkler clamp according to Claim 1 or 2, **characterised in that**, for captive retention, the closing element (22) can be inserted into the first opening (18) only in an inclined position.

4. A sprinkler clamp according to any one of the preceding Claims, **characterised in that** the closing element (22) is in the form of a closure nut with an internally threaded through-bore (32).

5. A sprinkler clamp according to Claim 4, **characterised in that** the internal thread in the through-bore (32) ends at a distance from the region of the radial widenings (30).

6. A sprinkler clamp according to any one of the preceding Claims, **characterised in that** the closing element (22) has a roughened grip region (34) on its circumferential surface.

7. A sprinkler clamp according to any one of the preceding Claims, **characterised in that** the mounting bracket (12) is made of sheet metal.

8. A sprinkler clamp according to any one of the preceding Claims, **characterised in that** the mounting bracket (12) provides a radial spring force by which the closing element (22) inserted into the openings (18,20) is retained in a preassembly position.

## Revendications

1. Collier d'arrosage comportant un arceau de fixation (12) en forme de boucle, s'ouvrant, dont les extrémités (14, 16) comportent chacune un orifice (18, 20) et se chevauchent en position fermée,
un premier orifice (18) de l'extrémité intérieure (14) de l'arceau de fixation (12) correspondant à un second orifice (20) de l'extrémité côté extérieur (16) de l'arceau de fixation (12), et un élément de fermeture (22) qui, en position montée, est engagé à rotation dans les deux orifices (18, 20) et comporte une partie radiale en saillie (24) s'appuyant de l'intérieur contre le bord (26) de l'orifice côté intérieur (18),
la section du second orifice (20) étant différente de celle du premier orifice (18) et l'élément de fermeture (22) comporte à distance de la partie en saillie radiale (24), une extension radiale (30) par laquelle il est tenu de manière imperdable au bord (26) du premier orifice (18) tout en pouvant s'introduire dans le second orifice (20),
**caractérisé en ce qu'**
à son extrémité du côté opposé à la partie radiale en saillie (24), l'élément de fermeture (22) comporte deux extensions radiales (30) se faisant face, et constituées par des parties en saillie réalisées dans la matière ou sous forme de pattes recourbées,
le bord (26) du premier orifice (18) étant muni d'une découpe (36) dont la forme est adaptée au moins à celle de l'une des deux extensions radiales (30).

2. Collier d'arrosage selon la revendication 1,
**caractérisé en ce que**
les orifices (18, 20) sont de forme circulaire et le diamètre du second orifice (20) est plus grand que la plus grande dimension radiale de l'élément de fermeture (22) au niveau de l'extension radiale (30).

3. Collier d'arrosage selon la revendication 1 ou 2,
**caractérisé en ce que**
l'élément de fermeture (22) s'introduit dans le premier orifice (18) seulement en position inclinée pour une tenue imperdable.

4. Collier d'arrosage selon l'une des revendications précédentes,
**caractérisé en ce que**
l'élément de fermeture (22) est réalisé sous la forme d'un écrou de fermeture muni d'un perçage traversant (32) avec un filetage intérieur.

5. Collier d'arrosage selon la revendication 4,
**caractérisé en ce que**
le filetage intérieur se termine dans le perçage traversant (32) à distance de la zone des extensions radiales (30).

6. Collier d'arrosage selon l'une des revendications précédentes,
**caractérisé en ce que**
la surface périphérique de l'élément de fermeture (22) comporte une zone de préhension (34) rendue rugueuse.

7. Collier d'arrosage selon l'une des revendications précédentes,
**caractérisé en ce que**
l'arceau de fixation (12) est en tôle.

8. Collier d'arrosage selon l'une des revendications précédentes,
**caractérisé en ce que**
l'arceau de fixation (12) exerce une force de ressort, radiale, pour tenir l'élément de fermeture (22) introduit dans les orifices (18, 20), dans une position de préassemblage.
